# EUROPEAN PATENT SPECIFICATION

(11) **EP 1 124 176 B1**
(45) Date of publication and mention of the grant of the patent: **11.03.2009**
(21) Application number: 01300171.4
(22) Date of filing: 10.01.2001
(51) Int. Cl.: G06F 3/048

(54) **Display system**
Anzeigesystem
Système d'affichage

(30) Priority: 11.01.2000 GB 0000541
(43) Date of publication of application: 16.08.2001
(73) Proprietor: RESEARCH MACHINES PLC, Milton, Abingdon, Oxon OX14 4SE (GB)
(72) Inventor: Tricklebank, Stuart, Headington, Oxford OX3 7EY (GB); Richards, Aled, Cardiff, Wales CF5 1LZ (GB)
(74) Representative: Loveless, Ian Mark

(56) References cited:
- US-A- 5 402 152
- US-A- 5 644 737

## Description

### Background to the invention

In recent years most lectures to large gatherings have used pre-prepared presentations displayed via a projector, displaying the image from the computer on a projection screen.

These systems whilst popular have not yet been widely used in traditional school teaching or other more interactive one to many presentations. The principal reason for this is that the didactic approach of many teachers does not lend itself to having a fully scripted pre-prepared presentation.

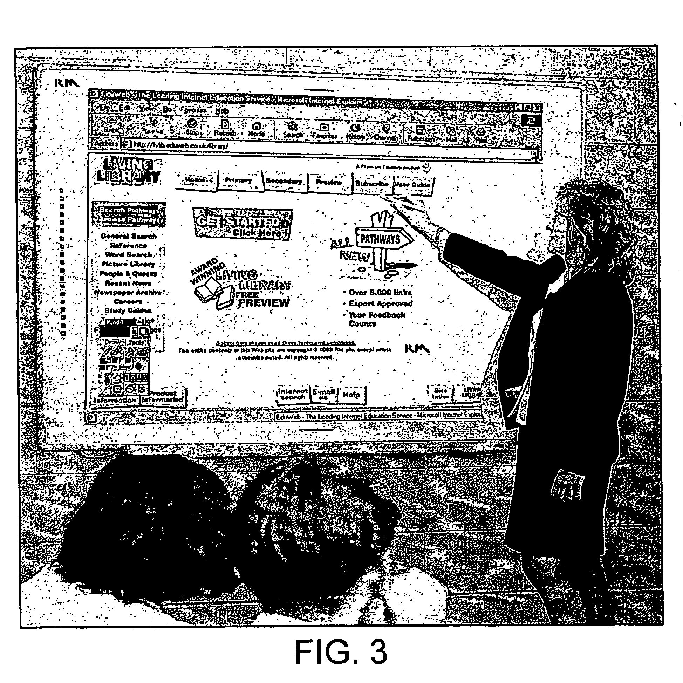

More recently some schools have started to use more interactive electronic displays boards as shown in Figure 3. These "Electronic whiteboards" allow both display of standard computer presentations but also allow interactions directly by enabling the presenter to "write" or in other ways directly manipulate the computer generated image while standing at the board, via use of an "electronic marker".

In a separate strand of development many software packages have in recent years allowed toolbars to be moved around the edges of screens and windows by user choice via menus or by "dragging and dropping".

Whilst there has been big development in both electronic whiteboards and windowing and teaching software in general there has been relatively little activity in the generation of software specifically for the electronic whiteboard environment.

When using an electronic whiteboard in an interactive manner a teacher or presenter will typically manipulate the images on the screen using an electronic marker of some sort. They will do this standing at the projected screen itself as shown in Figure 3. This leads to a problem in that toolbars/menus for the software do not easily lend themselves to being at the top or the bottom of the screen (at the top you have to stand on tip toe and in front of the display surface, at the bottom you have to crouch down which is not very comfortable or natural).

We have appreciated that the favoured location for a toolbar is at the side of a display, but have appreciated that this in turn leads to a problem, if a left hand edge is chosen for the high volume interaction toolbar, then it will be comfortable for a right-handed person but uncomfortable for a left-handed person.

US Patent 5,644,737 describes how a user can place a toolbar anywhere on a display by adrag and drop operation.

### Summary of the invention

According to a preferred embodiment of the invention, there is provided a system according to claim 1.

The invention allows a toolbar to be swapped from one side of the presentation display to another to allow for left and right-handed users. Even when the toolbar is positioned comfortably for a users' natural 'handedness' the user may want to quickly swap between sides of the board to work on material that is currently displayed on the other side of the screen. They will want to stand in front of the screen as little as possible as this obliterates the image from view. In the preferred embodiment, the controller allows swapping of the high interaction toolbar/menu between the right and left edges of the screen by a single click, thereby instantly allowing the presenter/teacher to swap sides.

A corresponding method and computer program are also provided.

### Brief Description of the Figures

An embodiment of the invention will now be described, by way of example only, in which:
Figure 1 shows a presentation display screen embodying the invention with a toolbar shown on one side;
Figure 2 shows the display screen of Figure 1 with the toolbar translated to the opposite side;
Figure 3 shows a whole display screen in use;
Figure 4 gives overview of the entire embodiment and shows the display controller and user input;
Figure 5 is a high-level diagram of how the screen is rearranged and displayed once the side to "rearrange to' has been determined;
Figure 6: is a lower-level diagram describing what happens when a CompositeScreenItem (that is, a group of ScreenItem primitives) is told to change it's position (this is called from algorithm defined in figure 5);
Figure 7: is a lower-level diagram describing what happens when a ScreenItem (i.e. a visual-object primitive) is told to change it's position (called from the algorithm defined in figure 6);
Figure 8: is low-level diagram of the AddDirtyRect function which is used to record what part of the screen will need updating based on the objects which move as a result of the rearrangement (called from figure 7); and
Figure 9: is a diagram showing the function that actually carries out the process of rendering and drawing the screen - that is, building up the image on a 'background buffer' and then transfering that image onto the physical screen (called from figure 5).

### Description of a preferred embodiment of the invention

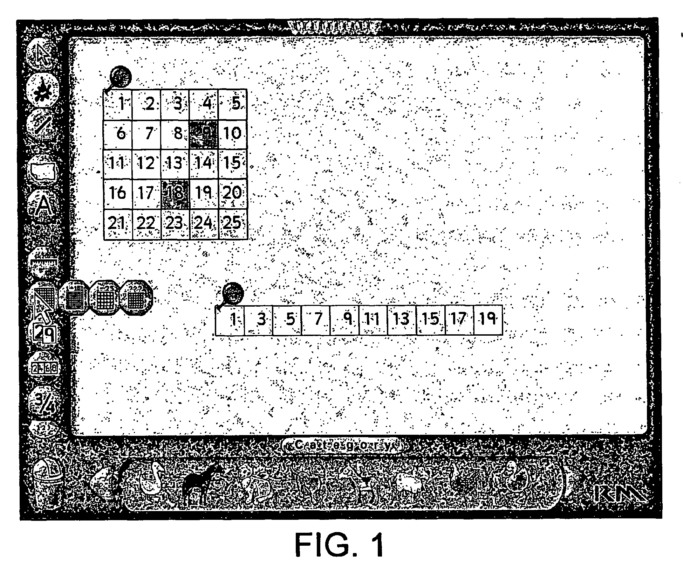

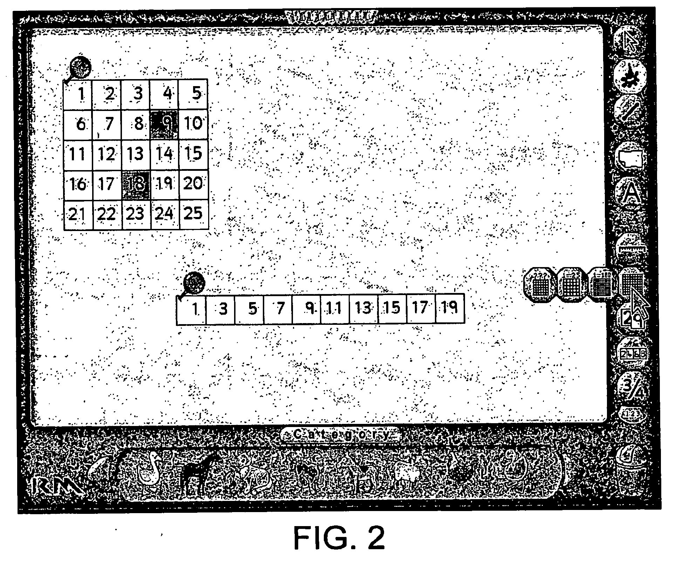

The preferred embodiment is a product that is intended for use for Primary school whole class mathematics teaching using an electronic white board (see Figure 3 for an example of the sort of whiteboard). The tool buttons that are manipulated by a user are situated on a wide border on one side of the whiteboard. The tools can then be manipulated without the user obscuring any part of the board (as happens partially for example in Figure 3). The preferred side on which to have the buttons may depend on whether the user is left or right-handed, personal preference and may even change whilst the software is in use. For example if the screen was displayed with the tools on the left hand side of the screen (see Figure 1) and the user was stood on the right hand side of the screen, the tools could easily be summoned to that side by touching a single active area of the screen (in this case the RM logo). The user input is thus an on screen button. Other types of on screen or physical simple user inputs could be appropriate. The tools would flip to the right hand side of the screen and the 'flipping' button would move to the left-hand side of the screen. The working area of the screen itself would also shift to the left to accommodate the wider border (see Figure 2).

The embodiment may be used for all whiteboard software and all software used for large display areas that have the presenter standing up manipulating images directly on the projected surface.

The system is implemented using Microsoft Visual C++ 6.0 (SP3) and is designed to run on MS Windows 9X/2000/NT. MFC AppWizard was used to create an initial Document/View application. The application runs full-screen, which was achieved by removing the 'titlebar' from the 'Main Frame' of the application and setting its size and position to fill the screen.

The applications screen is made up of a work-area and a set of toolbars positioned around it. All elements of the user interface (the workarea and the buttons) are made up of a group of basic object-oriented graphic primitives called ScreenItems which can be positioned, hit-tested etc. The ScreenItem class is an interface class, which is sub-classed to provide functionality for a large array of object-oriented drawing primitives such as sprites, text, lines, rectangles etc.

A CompositeScreenItem class is defined which allows multiple ScreenItems to be combined together to work as one - e.g. if the position of the composite is changed, all the member objects move accordingly. The CompositeScreenItem class is derived from a ScreenItem and, as a result, works in the same way.

The toolbars and work-area itself are sub-classes of the CompositeScreenItems class.

The majority of the classes are used for screen handling and provide an API to allow graphical objects created and moved on the screen using a double-buffered rendering-and-drawing approach. There are also files for parsing custom files to store configuration information.

All objects displayed on the screen have a base class of CscreenItem which is derived to provide specific screen-update classes (e.g. classes for handling sprites). This CscreenItem is sub-classed a number of times to provide a CpapyrusObject type which is the common base-class of all objects placed on the work-area. Among other information, this contain a list of pointers to any objects which are attached to it. It also aligns objects when they are placed on top of other objects and provides facilities such as object-specific painting algorithms etc. Code is also provided within this class to facilitate the saving of a screen which works by recursing through the object hierarchy and saving relevant information to a file at each level. This work-area itself is a CpapyrusObject itself which means there is a great deal of code reuse.

The application is designed to run a 800x600 256 colour mode and operates full-screen by setting the screen size to fill the screen, and removing the border, menu and title-bar.

Button bars are facilitated through a CbuttonTray class which is subclassed from a derivation of CscreenItem and provides code to display expanding button bars. This is then sub-classed to provide radio-button bar functionality.

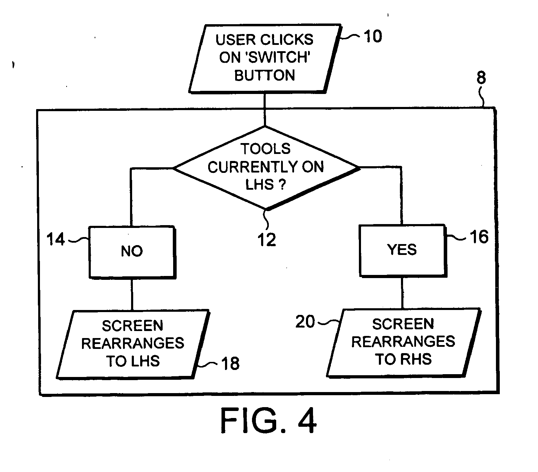

Figure 4 is a high-level representation on what happens when the user wants to switch the toolbars from one side to another. These are the functions performed by the display controller 8. A user clicks on a simple user input 10, here switch a button such as an on screen button as previously described. At step 12, the display controller determines whether the toolbar is currently on the left-hand side. If yes, then the screen is rearranged to show the toolbar on the right-hand side at step 20. If no, the screen rearranges the toolbar to be shown on the left-hand side.

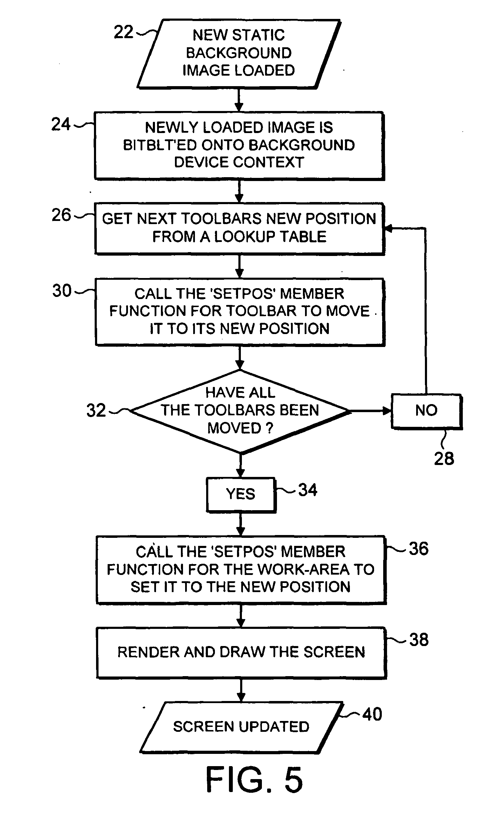

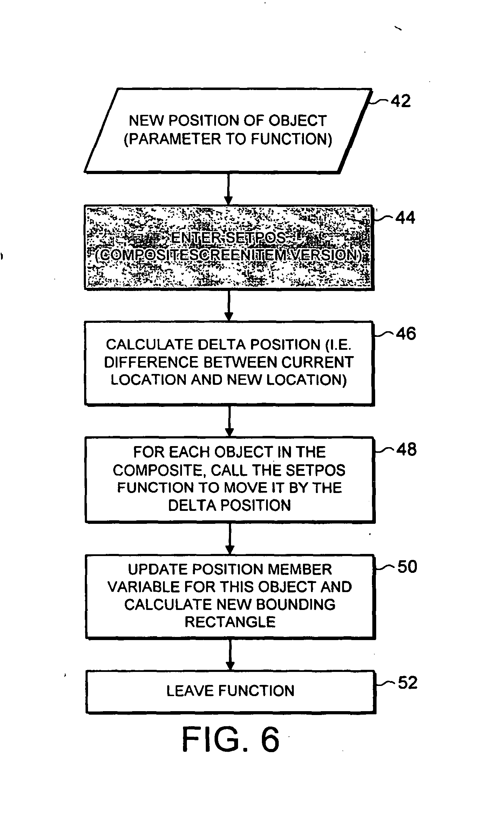

Figure 5 illustrates how the screen is rearranged after the user has pressed the switch button and the side to be changed to has been determined. At 22 a new static background image is loaded. At step 24, this image is copied onto a background Device-Context. At step 26, each toolbar's new position is determined from a look-up table. At step 30, a function is called to move the toolbar to its new position. If all toolbars have been moved at step 32, then the work area is set to a new position at step 36, the screen rendered at step 38 and updated at step 40. The function that moves the toolbar and work-area is a SetPos function. Figure 6 provides a representation of how the SetPos function in the composite ScreenItem class works. As previously described, the composite ScreenItem class allows multiple screen items to be combined together to work as one. At step 42, the new position of an object is passed into the SetPos function at step 44. At step 46, the delta position is calculated -the difference between the current location and the new location. At step 48, the SetPos function is called to move each object to its new position. And step 50, the new position is stored and the bounding rectangle is calculated. At step 52 the function is terminated.

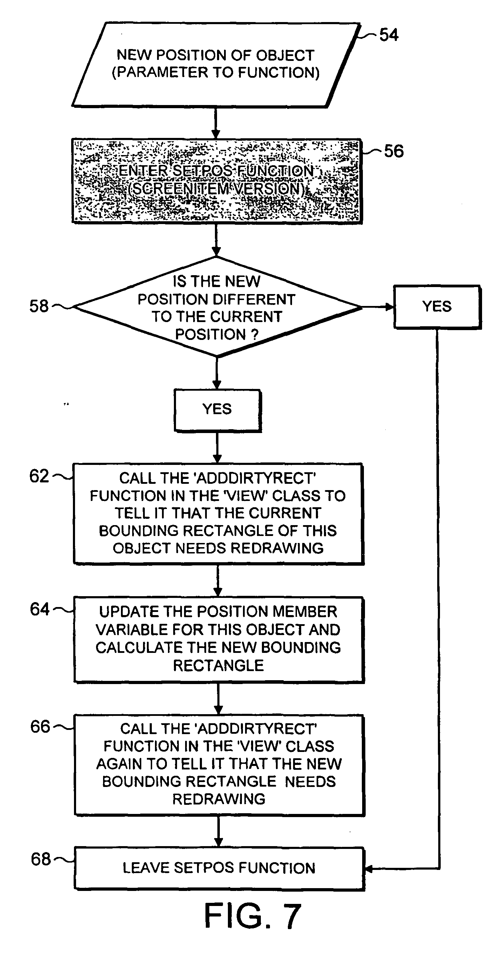

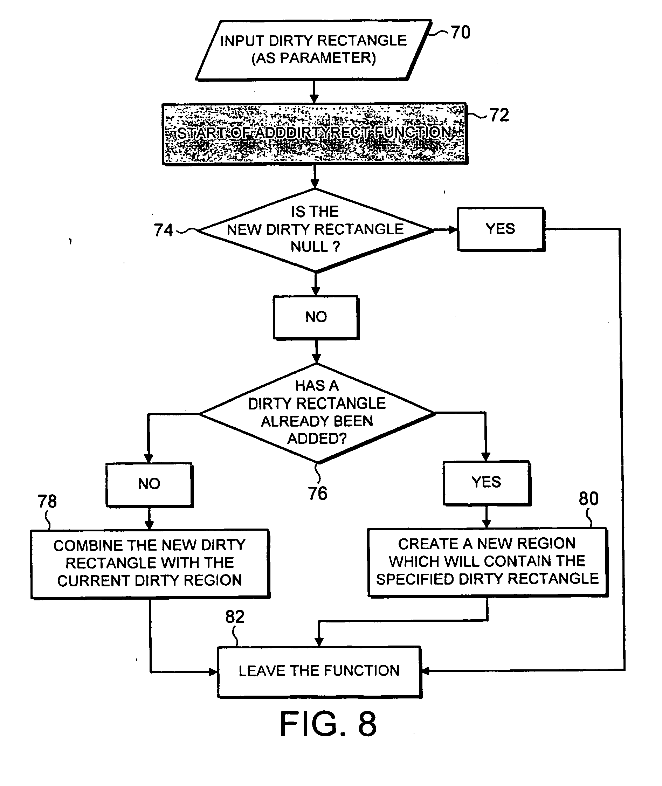

Figure 7 provides a representation of how the basic screen item SetPos function works. The function calls functions in the view class that are responsible for updating the screen. At 54 the new position of an object is passed to the SetPos function at step 56. At step 58, it is determined whether the new position is different from the current position. If not, then no further action is taken. If yes, a function named AddDirtyRect is called to tell the view that the area within the current bounding rectangle of the object needs redrawing. At step 68, the SetPos function is terminated. The AddDirtyRect function is shown in figure 8.

The AddDirtyRect function is used to record those areas of the screen that change to minimize the amount of the screen which needs redrawing. This is more efficient than redrawing the entire screen. At step 70, the 'dirty rectangle' is passed to the AddDirtyRect function 72. If the new dirty rectangle 74 is null, the function is terminated at step 82. If a new dirty rectangle has been added at step 76, then a new dirty region is created to specify this rectangle at step 80. If any dirty rectangle has not been added, then the new dirty rectangle is combined with a current dirty region at step 78.

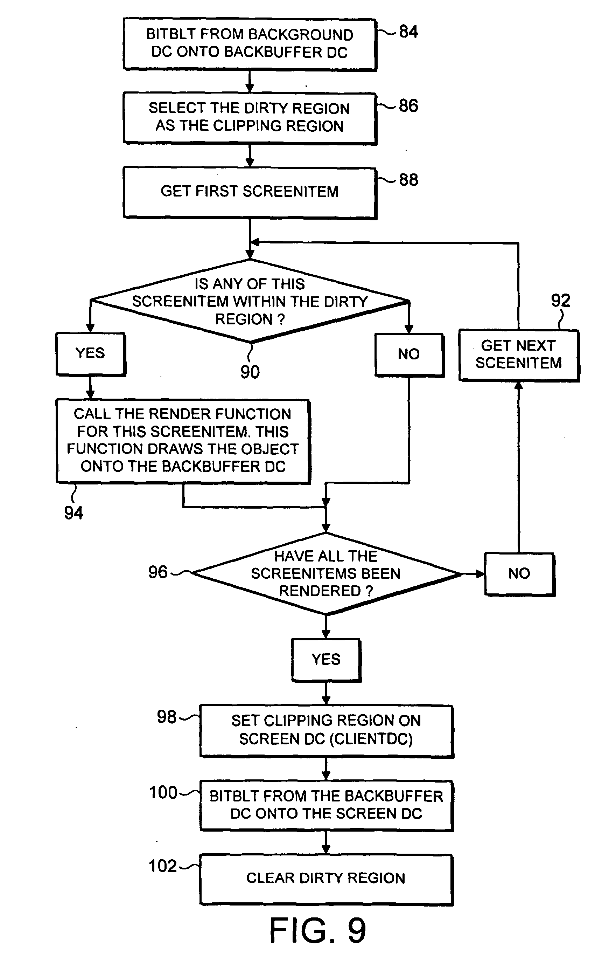

Lastly, figure 9 represents the code that actually redraws the screen, and is the function performed by the display controller. At step 84, the background Device Context is copied onto another background buffer and at step 86 the clipping region is set to match the dirty region and a first screen item chosen at step 88. If any of the new screen items is within the dirty region at step 90, then a render function is called for that screen item at step 90. If all screenitems have been rendered at step 96, the clipping region is set for the Screen's Device Context at step 98, and the background buffer is copied onto the screen at step 100 and the dirty region cleared at step 102.

## Claims

1. A system adapted to control an electronic whiteboard having a presentation display configured to show a plurality of user input objects through which a user may interact, the system comprising:
a display controller for controlling the presentation display to show the plurality of user input objects as a toolbar at one side of the presentation display; and
a user input device, comprising a button displayed on the presentation display, arranged to provide a user control of the presentation display;
wherein the display controller and user input device are configured to control the presentation display to swap the position of the toolbar from one side of the presentation display to the other through a user interaction with the button, and the button is shown on the opposite side of the presentation display from the toolbar.

2. A method of controlling an electronic whiteboard, having a presentation display, the presentation display showing a plurality of user input objects arranged as a toolbar, the method comprising:
displaying on the presentation display a user input device comprising a button;
detecting a user interaction with the button; and
controlling the presentation display, in dependence on the user interaction, to swap the position of the toolbar from one side of the presentation display to the other;
wherein the button is shown on the opposite side of the presentation display from the toolbar.

3. A computer program comprising computer program code which when executed on a computer undertakes the method of claim 2.

## Patentansprüche

1. System, das dazu angepasst ist, ein elektronisches Whiteboard mit einem zum Zeigen von mehreren, vom Benutzer eingegebenen Objekten, durch die ein Benutzer interagieren kann, ausgebildeten Präsentationsdisplay, zu steuern, wobei das System Folgendes umfasst:
eine Displaysteuerung zum Steuern des Präsentationsdisplays dazu, die mehreren vom Benutzer eingegebenen Objekte als eine Symbolleiste auf einer Seite des Präsentationsdisplays zu zeigen; und
eine Benutzereingabevorrichtung, umfassend eine auf dem Präsentationsdisplay angezeigte Schaltfläche, die dazu angeordnet ist, eine Benutzersteuerung des Präsentationsdisplays vorzusehen;
wobei die Displaysteuerung und die Benutzereingabevorrichtung dazu ausgebildet sind, das Präsentationsdisplay dazu zu steuern, die Lage der Symbolleiste durch eine Benutzerinteraktion mit der Schaltfläche von einer Seite des Präsentationsdisplays zur anderen zu wechseln und wobei die Schaltfläche auf der der Symbolleiste gegenüberliegenden Seite des Präsentationsdisplays gezeigt wird.

2. Verfahren des Steuerns eines elektronischen Whiteboards mit einem Präsentationsdisplay, wobei das Präsentationsdisplay mehrere vom Benutzer eingegebene Objekte als Symbolleiste angeordnet zeigt, wobei das Verfahren Folgendes umfasst:
Anzeigen einer eine Schaltfläche umfassenden Benutzereingabevorrichtung auf dem Präsentationsdisplay;
Erfassen einer Benutzerinteraktion mit der Schaltfläche; und
Steuern des Präsentationsdisplays in Abhängigkeit von der Benutzerinteraktion, um die Lage der Symbolleiste von einer Seite des Präsentationsdisplays zur anderen zu wechseln;
wobei die Schaltfläche auf der der Symbolleiste gegenüberliegenden Seite des Präsentationsdisplays gezeigt wird.

3. Computerprogramm, umfassend Computerprogrammcode, das, wenn es auf einem Computer ausgeführt wird, das Verfahren von Anspruch 2 ausführt.

## Revendications

1. Système adapté pour contrôler un tableau blanc électronique doté d'un affichage de présentation configuré pour représenter une pluralité d'objets entrés par l'utilisateur avec lesquels un utilisateur peut interagir, système comportant :
un contrôleur d'affichage pour contrôler l'affichage de présentation afin de représenter la pluralité d'objets entrés par l'utilisateur sous forme de barre d'outils d'un côté de l'affichage de présentation, et
un dispositif d'entrée par l'utilisateur, comportant un bouton apparaissant sur l'affichage de présentation, disposé de façon à fournir à l'utilisateur un contrôle de l'affichage de présentation ;
le contrôleur d'affichage et le dispositif d'entrée par l'utilisateur étant configurés pour contrôler l'affichage de présentation de façon à changer la position de la barre d'outils en la faisant passer d'un côté de l'affichage de présentation à un autre côté par une interaction de l'utilisateur avec le bouton, et le bouton étant représenté du côté de l'affichage de présentation opposé à la barre d'outils.

2. Procédé de contrôle d'un tableau blanc électronique, doté d'un affichage de présentation, l'affichage de présentation représentant une pluralité d'objets entrés par l'utilisateur disposés sous forme de barre d'outils, procédé consistant à :
afficher sur l'affichage de présentation un dispositif d'entrée par l'utilisateur comportant un bouton ;
détecter une interaction de l'utilisateur avec le bouton ; et
contrôler l'affichage de présentation, suivant l'interaction de l'utilisateur, pour changer la position de la barre d'outils en la faisant passer d'un côté de l'affichage de présentation à l'autre ;
le bouton étant représenté du côté de l'affichage de présentation opposé à la barre d'outils.

3. Programme d'ordinateur comportant un code de programme d'ordinateur qui, quand il est exécuté sur un ordinateur, se charge du procédé de la revendication 2.
